# EUROPEAN PATENT SPECIFICATION

(11) **EP 2 506 460 B1**
(45) Date of publication and mention of the grant of the patent: **02.10.2013**
(21) Application number: 11305351.6
(22) Date of filing: 29.03.2011
(51) Int. Cl.: H04B 10/50, H04J 14/02

(54) **High symbol rate wavelength division multiplexed system**
Wellenlängenmultiplexsystem mit hoher Symbolrate
Système multiplexé à division par longueur d'ondes à débit élevé de symboles

(43) Date of publication of application: 03.10.2012
(73) Proprietor: Alcatel Lucent, 75007 Paris (FR)
(72) Inventor: Charlet, Gabriel, 91620 Nozay (FR); Salsi, Massimiliano, 91620 Nozay (FR); Renaudier, Jeremie, 91620 Nozay (FR)
(74) Representative: Sciaux, Edmond

(56) References cited:
- WO-A1-01/73980
- WO-A1-03/081812
- US-A1- 2002 063 922

## Description

### BACKGROUND

The present invention relates to the field of optical networks. In particular, the present invention relates to a method and system for improving the performance of a Wavelength Division Multiplexed (WDM) system operating with channel spacing close to symbol rate.

As usable optical bandwidths approach the physical limits of optical fibres, providers of WDM systems are coming under increasing pressure to provide networks with higher spectral efficiency. One way of doing this is to implement WDM networks operating with channel spacing close to symbol rate. Such networks provide an efficient way of increasing system capacity with low transmission reach reduction.

Because spacing between channels in such systems is so small, wavelength stability (normal variations in laser wavelength of up to +/- 1 to 2 GHz) can become a severe limitation when channel spacing is set to within a few GHz of the symbol rate (i.e. when the channel spacing equals the symbol rate plus a few GHz).

In order to try and address this problem, prior art WDM systems, which typically operate at 43Gsymbols/s for a 50GHz channel spacing, use technologies such as laser wavelength lockers. For denser wavelength systems however, where channel spacing can be reduced to less than the normal variation in laser wavelength (i.e. less than 1.5 to 2 GHz), such technologies either become inefficient, or prohibitively costly.

International Patent Application WO 03/081812 A1 discloses a system to stabilize the wavelength of light sources in a Wavelength Division Multiplexing system comprising an optical heterodyne receiver to detect the wavelength difference between a reference source and each light source to control.

### SUMMARY OF THE INVENTION

In order to solve the problems associated with the prior art, the present invention provides a method of adjusting at least one transponder laser in a Wavelength Division Multiplexed grid, the method comprises the steps of:
providing a first signal at a first wavelength using a first transponder laser;
providing a second signal at a second wavelength using a second transponder laser, the second wavelength being adjacent to the first wavelength in the grid;
modulating the second signal to produce a third signal at a predetermined spectral distance from the second signal, such that the spectral distance between the third signal and the first signal is shorter than the spectral distance between the second signal and the first signal; and
determining, using the position of the third signal, the spectral distance between the first signal and the second signal;
adjusting the wavelength of the second laser such that the spectral distance between the first signal and the second signal is within a predetermined range.

In a first embodiment, the step of using the position of the third signal to determine the spectral distance between the first signal and the second signal includes the step of measuring the spectral distance between the third signal and the first signal; and
the wavelength of the second laser is adjusted until the spectral distance between the third signal and the first signal is below a predetermined amount.

Preferably, in the first embodiment, the step of modulating the second signal includes modulating the second signal with a Return to Zero pulse carver.

In a second embodiment, the method further comprises the step of modulating the first signal to produce a fourth signal at a predetermined spectral distance from the first signal, such that the spectral distance between the fourth signal and the second signal is shorter than the spectral distance between the second signal and the first signal;
the step of using the position of the third signal to determine the spectral distance between the first signal and the second signal includes the step of measuring the spectral distance between the third signal and the fourth signal; and
the wavelength of the second laser is adjusted until the spectral distance between the third signal and the fourth signal is within a predetermined range.

In the second embodiment, the step of modulating the second signal preferably includes modulating the second signal with a Carrier Suppressed Return to Zero pulse carver.

Preferably, the step of measuring the spectral distance is performed using a photodiode.

The present invention also provides a method of adjusting a plurality of transponder lasers in a Wavelength Division Multiplexed grid, the method comprises the steps of:
performing the method of any of the above claims for each pair of adjacent transponder lasers.

The present invention further provides a computer program product which comprises computer-executable instructions for performing the above method steps.

The present invention also provides an apparatus for adjusting at least one transponder laser in a Wavelength Division Multiplexed grid, the apparatus comprises:
a first transponder laser arrange to provide a first signal at a first wavelength;
a second transponder laser arranged to provide a second signal at a second wavelength, the second wavelength being adjacent to the first wavelength in the grid;
a modulator arranged to modulating the second signal to produce a third signal at a predetermined spectral distance from the second signal, such that the spectral distance between the third signal and the first signal is shorter than the spectral distance between the second signal and the first signal; and
spectral distance determining means arranged to determine the spectral distance between the first signal and the second signal by using the position of the third signal;
control means arranged to adjust the wavelength of the second laser such that the spectral distance between the first signal and the second signal is within a predetermined range.

In a first embodiment, the spectral distance determining means is preferably arranged to measure the spectral distance between the third signal and the first signal; and

the control means is arranged to adjust the wavelength of the second laser until the spectral distance between the third signal and the first signal is below a predetermined amount.

In the first embodiment, the modulator is preferably a Return to Zero pulse carver.

In a second embodiment, the apparatus preferably further comprises a modulator arranged to modulate the first signal to produce a fourth signal at a predetermined spectral distance from the first signal, such that the spectral distance between the fourth signal and the second signal is shorter than the spectral distance between the second signal and the first signal;

the spectral distance determining means is arranged to measure the spectral distance between the third signal and the fourth signal; and

the control means is arranged to adjust the wavelength of the second laser until the spectral distance between the third signal and the fourth signal is within a predetermined range.

In the second embodiment, the modulator is preferably a Carrier Suppressed Return to Zero pulse carver.

Preferably, the spectral distance determining means is a photodiode.

As will be appreciated, the present invention provides several advantages over the prior art. For example, by using the present invention, it is possible to provide a WDM system with the ability to operate at a symbol rate which is close to channel spacing, without the need to set carrier frequencies at precise and specific positions on a spectrum, thereby avoiding the use of expensive and complex laser wavelength locking devices.

### BRIEF DESCRIPTION OF THE DRAWINGS

Several exemplary embodiments of the present invention will now be described with reference to the accompanying drawings, in which:
Figure 1 shows a block diagram of a device in accordance with one embodiment of the present invention;
Figure 2 shows a series of schematic diagrams representing spectra at various points in the device of Figure 1;
Figure 3 shows a flow chart of a method used in accordance with an embodiment of the present invention;
Figure 4 shows a block diagram of a device in accordance with another embodiment of the present invention; and
Figure 5 shows a series of schematic diagrams representing spectra at various points in the device of Figure 4.

### DETAILED DESCRIPTION

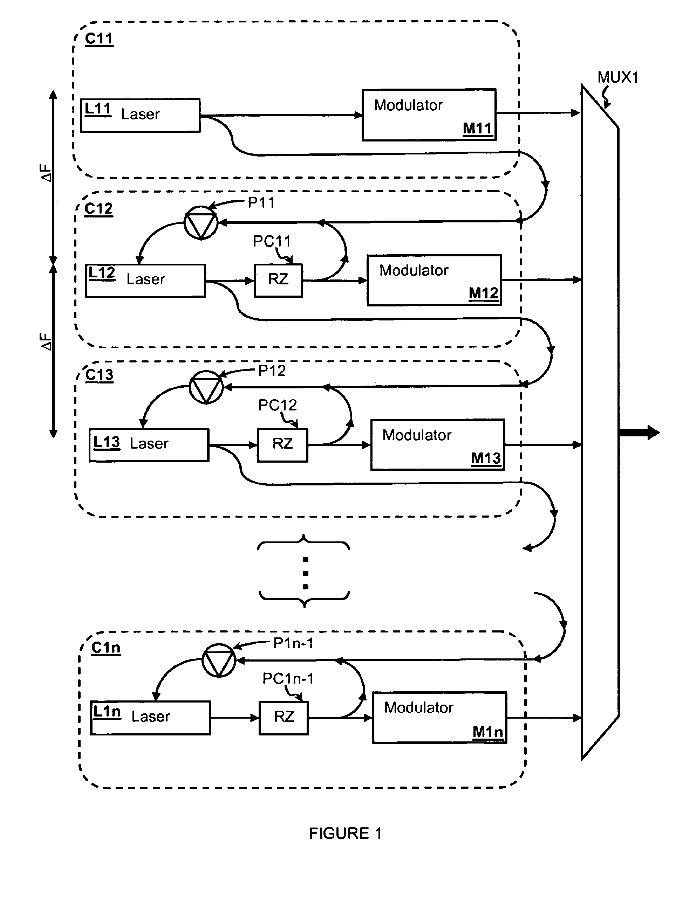

Figure 1 is a schematic block diagram representing a series of n transponders C11, C12,..., C1n in accordance with one embodiment of the present invention. These transponders can be used in a Wavelength Division Multiplexed (WDM) optical network. More particularly, each transponder shown in Figure 1 can be implemented in a card which is then inserted within a shelf. Each card is connected to a cross-connect or IP router on one side (i.e. the client side) and to a WDM multiplexer on the other side (i.e. the WDM side). The interconnections between the transponders, as described below, can be implemented in any of a number of known ways.

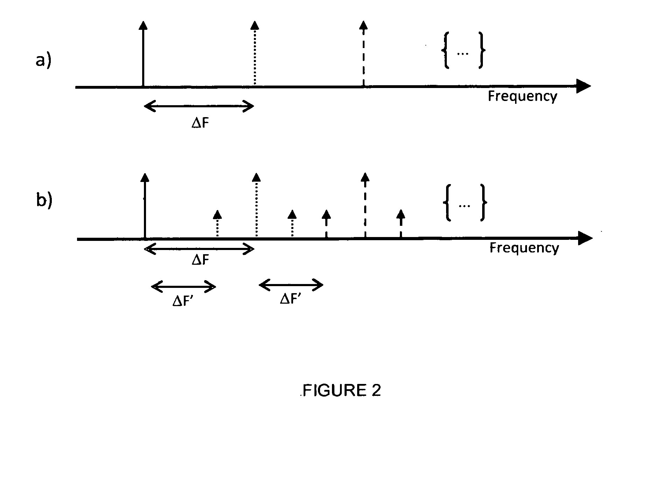

The outputs of the transponders are multiplexed together by wavelength multiplexer MUX1. Each transponder C11, C12,..., C1n produces an optical carrier signal, which is then modulated. The modulated signals are then multiplexed onto a single optical fibre. Each transponder C11, C12,..., C1n comprises a tuneable laser L11, L12,..., L1n and a modulator M11, M12,...,M1n. Each laser L11, L12,..., L1n produces a signal at a particular wavelength, before being modulated by modulators M11, M12,...,M1n, respectively. The signals output by the lasers L11, L12,..., L1n produce a WDM carrier grid, as shown in Figure 2a. In the embodiment shown in Figures 1 and 2, each carrier wavelength is separated by a predefined channel spacing ΔF. Alternative embodiments however could include a carrier grid having carrier signals separated by unequal spectral distances. Typically, current WDM systems operate at 43Gsymbol/s for a 50GHz channel spacing ΔF. However, it will be appreciated that other channel spacing values are possible.

One problem with operating WDM systems at symbol rates which approach channel spacing, is that lasers L11, L12,..., L1n have a certain amount of variability in terms of wavelength. Modern lasers operating in typical WDM systems can vary from between +/- 2 GHz, and will typically vary between +/- 1.5 GHz. Accordingly, for a grid comprising two carriers, a first implemented using a laser being set at 50GHz and a second implemented using a laser being set at 100GHz, it is possible that the resulting carrier distance could be, for example, 46GHz, if the first laser has a variation of +2GHz and the second laser has a variation of -2GHz. Again, in the case of a system operating at 43Gsymbol/s, this might not pose a problem. As channel spacing and symbol rate move towards the same values however, variations of this magnitude can become problematic and can cause significantly negative effects on signal quality and the systems Bit Error Rate (BER). Some technologies exist that are intended to increase the precision of such lasers, though these technologies are expensive, and can be complicated to implement.

The applicant has appreciated that, in order to remedy this situation, it is not necessary to provide a grid comprising a plurality of carrier signals being set at precise wavelengths. Instead, it is sufficient to provide a grid comprising a plurality of carrier signals being positioned at precisely the same distance from each other, regardless of their individual positions on the spectrum.

One object of the present invention is therefore to provide a system which can tune each laser L12, L13,..., L1 n in a WDM carrier grid in accordance with the value of the preceding laser in the grid. Thus, even if laser L11 in the grid is set to a slightly offset value, provided that the distance between carrier wavelengths can be effectively measure, it is possible to produce a carrier grid which has carrier wavelengths that are spaced equally apart.

One method of precisely measuring the spectral distance between two signals is by measuring the interference between the signals output by lasers L11, L12,..., L1n of adjacent transponders. A problem with this method is that any frequency difference detector that can measure the channel spacing must be capable of capturing the bandwidth ΔF. As will be appreciated, frequency difference detectors, such as photodiodes, are relatively expensive and have a cost which is generally proportional to the size of the bandwidth within which they operate. Accordingly, it can be prohibitively costly to implement a system which measures channel spacing by providing an accurate measurement of the difference between two carrier wavelengths.

In order to remedy this, the applicant has realised that it is possible to instead measure the difference in wavelength between the channel spacing and the symbol rate, which will typically only be a few GHz. In order to do this, the present invention links the outputs of the lasers of each transponder as described below.

Transponder C11 is said to be a "master" transponder because the wavelength of its laser L11 does not depend on the wavelength of any other laser L11, L12,..., L1n. Conversely, transponders C12, C13,...,C1n are said to be "slave" transponders because the wavelength of their lasers L12, L13,..., L1n depend on the wavelength of other transponders.

In the embodiment of Figure 1, each slave transponder C12, C13,..., C1n comprises a photodiode P11, P12,...P1n-1 and a pulse carver PC11, PC12,...PC1n-1. The pulse carver PC11, PC12,...PC1n-1 in each slave transponder C12, C13,..., C1n has an input connected to the output of its respective laser L12, L13,..., L1n and an output connected to the input of its respective modulator M12, M13,...,M1n. As will be appreciated, while the master transponder C11 in the embodiment of Figure 1 does not comprise a pulse carver or a photodiode, the master transponder C11 could also comprise both of these, and simply be configured to avoid their use.

In the embodiment of Figure 1, the pulse carvers PC11, PC12,...,PC1n-1 forming part of the slave transponders are Return to Zero (RZ) pulse carvers which produce spikes appearing in the spectrum at the clock frequency to which the pulse carver is operated, as well as a spike at the carrier frequency. In this embodiment of the present invention, RZ pulse carving generates spikes at a distance of the symbol rate of the modulator, on either side of the carrier (or half the symbol rate in the case of CS-RZ), in that the pulse carvers PC11, PC12,...,PC1n-1 are operated at the symbol rate of the modulators M12, M13,...,M1n.

At the output of each pulse carver PC11, PC12,...,PC1n-1 the signal is tapped in order for a potion of the signal, typically between 5% and 10% of the signal, to be sent to the photodiode.

As can be seen in Figure 1, the output of the pulse carver PC11 is input into the photodiode P11, together with the output of laser L11. The bandwidth of photodiode P11 is chosen to allow the measurement of one spike of the output of the pulse carver beating on the photodiode with the carrier of the un-modulated adjacent channel, thereby yielding a spectral component whose frequency is equal to the difference of the beating frequency components.

Figure 2a is a spectral representation of the output of the lasers L11 (solid line), L12 (dotted line) and L13 (dashed line), where each vertical arrow represents the carrier wavelength of the laser. As can be seen from Figure 2a, the distance between the carrier wavelengths in the grid is ΔF. Figure 2b is a spectral representation of a combination of the outputs of the lasers L11 (solid line), L12 (dotted line) and L13 (dashed line) and the outputs of the pulse carvers PC11 (short dotted lines) and PC12 (short dashed lines). The distance between a carrier spike and its side spikes will be equal to the rate at which the pulse carver is set to operate at. In accordance with a preferred embodiment of the invention, this value is taken to be the symbol rate of the modulator, and can be taken directly from the modulator in order to ensure precise operation of the system. As will be appreciated by the skilled reader, the operating rate of the pulse carver can alternatively be set to a value which is close to the symbol rate.

As can be seen from Figure 2b, the distance between the output of the laser L11 and the output of the closest side spike of the output of PC11 is ΔF', which is a shorter distance than ΔF. The closer the symbol rate is to the distance ΔF, the smaller ΔF' will be. The value of ΔF' can thus be used to fine tune laser L22 in accordance with the method described below, without the need to monitor or measure a large bandwidth on the spectrum. Once laser L22 is appropriately tuned, the same process is repeated for each slave transponder C12, C13,..., C1n. The result of this process is the provision of a WDM grid which comprises carriers that are precisely and equally spaced apart, without the need to precisely measure the actual distance between the carrier frequencies. Such a grid will therefore provide improved performance to the WDM system when operated with a symbol rate which approaches channel spacing.

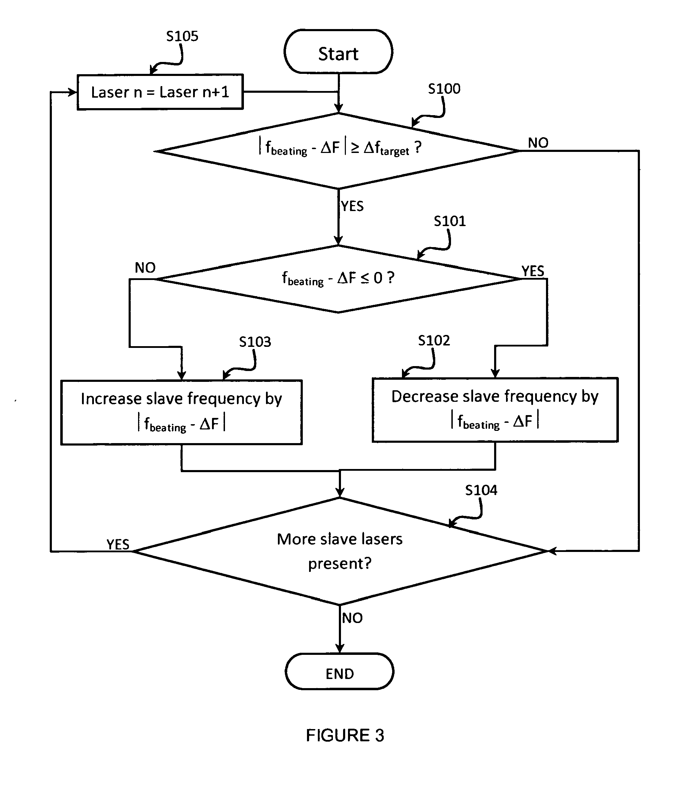

Figure 3 shows a flow chart representing a method of tuning a slave laser L12, L13,..., L1 n in accordance with one embodiment of the present invention. In first step S100, a determination is made as to whether the absolute value of the difference between the symbol rate f_{beating} and the channel spacing ΔF is larger or equal to the predetermined threshold value f_{target}. The predetermined threshold value f_{target} can be set to, for example, 1 GHz. As will be appreciated by the skilled reader however, other values can also be used, and can be determined by taking into account the characterisation of penalties (e.g. variations in the Bit Error Rate) observed by introducing mismatches between the carrier frequencies. If the absolute value of the difference between the symbol rate f_{beating} and the channel spacing ΔF is smaller than the predetermined threshold value f_{target}, the method proceeds to steps S104 and S105. At steps S104 and S105, if another slave transponder exists in the grid/shelf, the next slave transponder is considered. If no other slave transponder exists in the grid/shelf, the method is stopped, as all transponders in the grid will have been tuned.

If, on the other hand, at step S100, the absolute value of the difference between the symbol rate f_{beating} and the channel spacing ΔF is larger or equal to the predetermined threshold value f_{target}, then step S101 is performed. At step S101, a determination is made as to whether f_{beating} - ΔF is smaller or equal to zero. If f_{beating} - ΔF is smaller or equal to zero, the slave laser frequency is decreased by the absolute value of f_{beating} - ΔF at step S102. On the other hand, if f_{beating} - ΔF is not smaller or equal to zero, the slave laser frequency is increased by the absolute value of f_{beating} - ΔF, at step S103. As will be appreciated by the skilled reader, the value by which the slave laser is increased or decreased can vary depending on the embodiment, and required system performance. For example, in another embodiment of the present invention, the slave laser is incrementally increased or decreased by a value of f_{target}, until such a time as the absolute value of f_{beating} - ΔF is brought to a value below f_{target}.

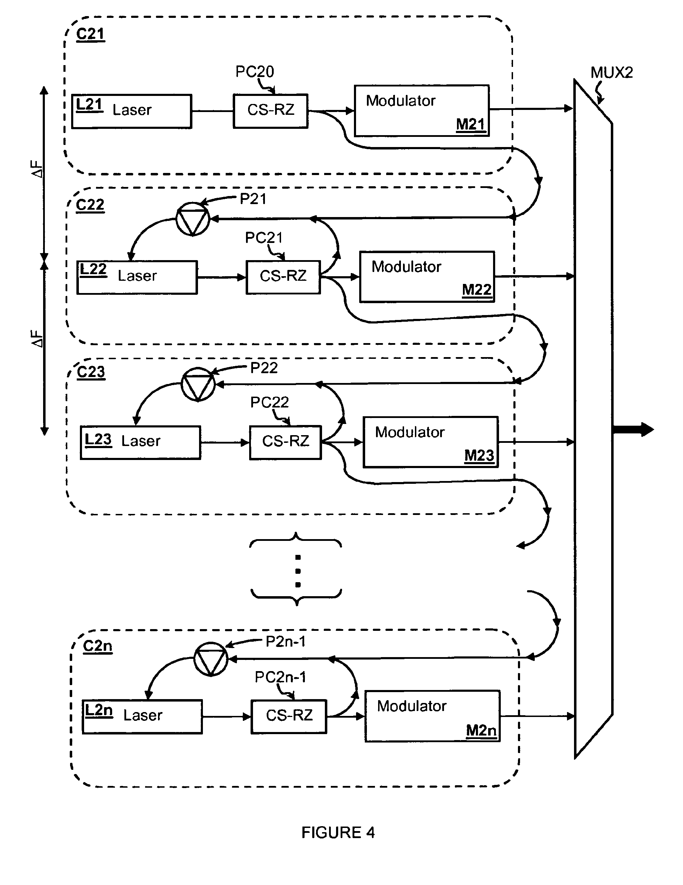

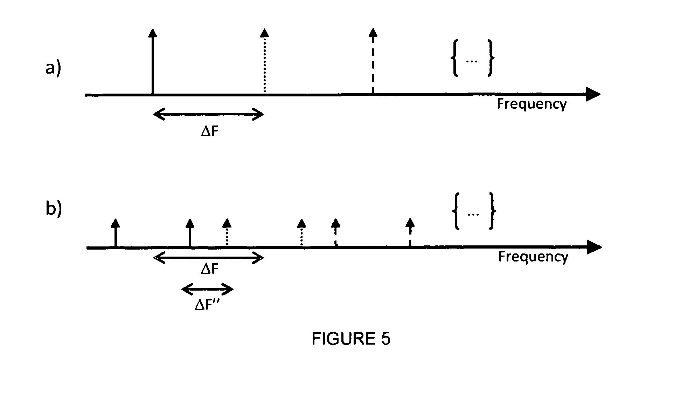

With reference to Figures 4 and 5, a second embodiment of the present invention will now be described. Figure 4 is a schematic block diagram representing a series of n transponders C21, C22,..., C2n in accordance with a second embodiment of the present invention. As is the case with the first embodiment described above, these transponders can be used in a Wavelength Division Multiplexed (WDM) optical network.

The outputs of the transponders are multiplexed together by wavelength multiplexer MUX2. Each transponder C21, C22,..., C2n produces an optical carrier signal, which is then modulated. The resulting modulated signals are then multiplexed onto a single optical fibre. Each transponder C21, C22,..., C2n comprises a tuneable laser L21, L22,..., L2n and a modulator M21, M22,...,M2n. Each laser L21, L22,..., L2n produces a signal at a particular wavelength, before being modulated by a modulator M21, M22,...,M2n, respectively. The signals produced by the lasers L21, L22,..., L2n produce a WDM carrier grid, as shown in Figure 5a. In the embodiment shown in Figures 4 and 5, each carrier wavelength is separated by a predefined channel spacing ΔF. Alternative embodiments however could include a carrier grid having carrier signals separated by unequal spectral distances.

Similarly to the first embodiment, transponder C21 is said to be a "master" transponder because the wavelength of its laser L21 does not depend on the wavelength of any other laser L21, L22,..., L2n. Conversely, transponders C22, C23,...,C2n are said to be "slave" transponders because the wavelength of their lasers L22, L23,..., L2n depend on the wavelength of other transponders.

In the embodiment of Figure 4, each slave transponder C22, C23,..., C2n comprises a photodiode P21, P22,...P2n-1 and a pulse carver PC21, PC22,...PC2n-1. The pulse carver PC21, PC22,...PC2n-1 in each slave transponder C22, C23,..., C2n has an input connected to the output of its respective laser L22, L23,..., L2n and an output connected to the input of its respective modulator M22, M23,...,M2n. As will be appreciated, while the master transponder C21 in the embodiment of Figure 4 only comprises a pulse carver PC20, and does not comprise a photodiode, the master transponder C21 could also comprise a photodiode, and simply be configured to avoid its use.

In the embodiment of Figure 4, the pulse carvers PC21, PC22,...,PC2n-1 forming part of the slave transponders are Carrier Suppressed - Return to Zero (CS-RZ) pulse carvers, which produce spikes appearing in the spectrum at a distance from the carrier equal to half the clock frequency to which the pulse carver is operated. Carrier Suppressed - Return to Zero pulse carvers do not produce a central spike at the carrier frequency, as opposed to simple Return to Zero pulse carvers, as described above. In this embodiment of the present invention, CS-RZ pulse carving generates spikes at half the distance of the symbol rate of the modulator, on either side of the carrier.

At the output of each pulse carver PC21, PC22,...,PC2n-1 the signal is tapped in order for a potion of the signal, typically between 5% and 10% of the signal, to be sent to the photodiode, and another 5% to 10% to be send to the photodiode of the following slave transponder.

As can be seen in Figure 4, the output of the pulse carver PC21 is input into the photodiode P21, together with the output of the pulse carver of the previous transponder (in this case, the master transponder C21). The spikes of the output of the pulse carver will beat on the photodiode with spikes of the adjacent pulse carver.

Figure 5a is a spectral representation of the output of the lasers L21 (solid line), L22 (dotted line) and L23 (dashed line), where each vertical arrow represents the carrier wavelength of the laser. As can be seen from Figure 5a, the distance between the carrier wavelengths in the grid is ΔF. Figure 5b is a spectral representation of a combination of the outputs of the pulse carvers PC20 (short solid lines), PC21 (short dotted lines) and PC22 (short dashed lines). The distance between side spikes will be equal to the rate at which the pulse carver is set to operate at. In accordance with a preferred embodiment of the invention, this value is taken to be the symbol rate of the modulator, and can be taken directly from the modulator in order to ensure precise operation of the system.

As can be seen from Figure 5b, the distance between the output of the closest spikes of two adjacent pulse carvers PC11 is ΔF", which is a shorter distance than ΔF. The closer the symbol rate is to the distance ΔF, the closer ΔF" will become to half the negative value of the symbol rate. The value of ΔF" can thus be used to fine tune laser L22 in accordance with the method outlined below. Once laser L22 is appropriately tuned, the same process is repeated in each slave transponder C22, C23,...,C2n. The result of this process is a WDM grid which comprises carriers that are precisely and equally spaced apart. Such a grid will therefore also provide improved performance to the WDM system when operated with a symbol rate which approaches channel spacing. This embodiment is particularly advantageous, in that CS-RZ pulse carvers are relatively inexpensive.

The skilled reader will understand that the method for tuning the slave laser in accordance with the second embodiment of the present invention based on a measurement of ΔF" will be similar to the method used for the first embodiment of the present invention. The main difference between the method of the first embodiment and the method of the second embodiment is that, in the first embodiment the method measures the distance ΔF' and tunes adjacent slave laser until ΔF' is below a target value f_{target} (i.e. tuned so that the carrier frequency of the laser is separated from the closest side spike of the adjacent pulse carver by a value which is below f_{target}). In the present embodiment, however, distance ΔF" is measured and the adjacent slave laser is tuned such that the distance ΔF" is set to within a predetermined distance of half the negative value of the symbol rate (i.e. tuned so that the carrier frequency of the laser is separated from the closest side spike of the adjacent pulse carver by a value which is below a predetermined distance).

The skilled reader will understand the equivalence of the above methods. Moreover, a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

It should also be appreciated by those skilled in the art that any block diagrams herein represent conceptual views of illustrative circuitry embodying the principles of the invention.

## Claims

1. A method of adjusting at least one transponder laser in a Wavelength Division Multiplexed grid, the method comprising the steps of:
providing a first signal at a first wavelength using a first transponder laser;
providing a second signal at a second wavelength using a second transponder laser, the second wavelength being adjacent to the first wavelength in the grid;
modulating the second signal to produce a third signal at a predetermined spectral distance from the second signal, such that the spectral distance between the third signal and the first signal is shorter than the spectral distance between the second signal and the first signal; and
determining, using the position of the third signal, the spectral distance between the first signal and the second signal;
adjusting the wavelength of the second laser such that the spectral distance between the first signal and the second signal is within a predetermined range.

2. The method of claim 1, wherein:
the step of using the position of the third signal to determine the spectral distance between the first signal and the second signal includes the step of measuring the spectral distance between the third signal and the first signal; and
the wavelength of the second laser is adjusted until the spectral distance between the third signal and the first signal is below a predetermined amount.

3. The method of claim 2, wherein the step of modulating the second signal includes modulating the second signal with a Return to Zero pulse carver.

4. The method of claim 1, wherein:
the method further comprises the step of modulating the first signal to produce a fourth signal at a predetermined spectral distance from the first signal, such that the spectral distance between the fourth signal and the second signal is shorter than the spectral distance between the second signal and the first signal;
the step of using the position of the third signal to determine the spectral distance between the first signal and the second signal includes the step of measuring the spectral distance between the third signal and the fourth signal; and
the wavelength of the second laser is adjusted until the spectral distance between the third signal and the fourth signal is within a predetermined range.

5. The method of claim 4, wherein the step of modulating the second signal includes modulating the second signal with a Carrier Suppressed Return to Zero pulse carver.

6. The method of any of the preceding claims, wherein the step of measuring the spectral distance is performed using a photodiode.

7. A method of adjusting a plurality of transponder lasers in a Wavelength Division Multiplexed grid, the method comprising the steps of:
performing the method of any of the above claims for each pair of adjacent transponder lasers.

8. A computer program product comprising computer-executable instructions for performing the method of any of the preceding claims.

9. An apparatus for adjusting at least one transponder laser in a Wavelength Division Multiplexed grid, the apparatus comprising:
a first transponder laser arrange to provide a first signal at a first wavelength;
a second transponder laser arranged to provide a second signal at a second wavelength, the second wavelength being adjacent to the first wavelength in the grid;
a modulator arranged to modulating the second signal to produce a third signal at a predetermined spectral distance from the second signal, such that the spectral distance between the third signal and the first signal is shorter than the spectral distance between the second signal and the first signal; and
spectral distance determining means arranged to determine the spectral distance between the first signal and the second signal by using the position of the third signal;
control means arranged to adjust the wavelength of the second laser such that the spectral distance between the first signal and the second signal is within a predetermined range.

10. The apparatus of claim 9, wherein:
the spectral distance determining means is arranged to measure the spectral distance between the third signal and the first signal; and
the control means is arranged to adjust the wavelength of the second laser until the spectral distance between the third signal and the first signal is below a predetermined amount.

11. The apparatus of claim 10, wherein the modulator is a Return to Zero pulse carver.

12. The apparatus of claim 9, further comprising:
a modulator arranged to modulate the first signal to produce a fourth signal at a predetermined spectral distance from the first signal, such that the spectral distance between the fourth signal and the second signal is shorter than the spectral distance between the second signal and the first signal;
the spectral distance determining means is arranged to measure the spectral distance between the third signal and the fourth signal; and
the control means is arranged to adjust the wavelength of the second laser until the spectral distance between the third signal and the fourth signal is within a predetermined range.

13. The apparatus of claim 12, wherein the modulator is a Carrier Suppressed Return to Zero pulse carver.

14. The apparatus of any of the preceding claims, wherein the spectral distance determining means is a photodiode.

## Patentansprüche

1. Verfahren zum Anpassen mindestens eines Transponder-Lasers in einem wellenlängengemultiplexten Gitter, wobei das Verfahren die folgenden Schritte umfasst:
Bereitstellen eines ersten Signals mit einer ersten Wellenlänge unter Verwendung eines ersten Transponder-Lasers;
Bereitstellen eines zweiten Signals mit einer zweiten Wellenlänge unter Verwendung eines zweiten Transponder-Lasers, wobei die zweite Wellenlänge mit der ersten Wellenlänge in dem Gitter benachbart ist;
Modulieren des zweiten Signals, um ein drittes Signal in einem vorbestimmten spektralen Abstand von dem zweiten Signal zu erzeugen, derart, dass der spektrale Abstand zwischen dem dritten Signal und dem ersten Signal kürzer ist als der spektrale Abstand zwischen dem zweiten Signal und dem ersten Signal; und
Bestimmen, unter Verwendung der Position des dritten Signals, des spektralen Abstands zwischen dem ersten Signal und dem zweiten Signal;
Anpassen der Wellenlänge des zweiten Lasers, so dass der spektrale Abstand zwischen dem ersten Signal und dem zweiten Signal innerhalb eines vorbestimmten Bereichs liegt.

2. Verfahren nach Anspruch 1, wobei:
der Schritt des Verwendens der Position des dritten Signals zur Bestimmung des spektralen Abstands zwischen dem ersten Signal und dem zweiten Signal den Schritt des Messens des spektralen Abstands zwischen dem dritten Signal und dem ersten Signal umfasst; und
die Wellenlänge des zweiten Lasers so lange angepasst wird, bis der spektrale Abstand zwischen dem dritten Signal und dem ersten Signal unter einem vorbestimmten Wert liegt.

3. Verfahren nach Anspruch 2, wobei der Schritt des Modulierens des zweiten Signals das Modulieren des zweiten Signals mit einem Return-to-Zero-Puls-Carver umfasst.

4. Verfahren nach Anspruch 1, wobei:
das Verfahren weiterhin den Schritt des Modulierens des ersten Signals zum Erzeugen eines vierten Signals in einem vorbestimmten spektralen Abstand von dem ersten Signal umfasst, derart, dass der spektrale Abstand zwischen dem vierten Signal und dem zweiten Signal kürzer ist als der spektrale Abstand zwischen dem zweiten Signal und dem ersten Signal;
der Schritt des Verwendens der Position des dritten Signals zum Bestimmen des spektralen Abstands zwischen dem ersten Signal und dem zweiten Signal den Schritt des Messens des spektralen Abstands zwischen dem dritten Signal und dem vierten Signal umfasst; und
die Wellenlänge des zweiten Lasers so lange angepasst wird, bis der spektrale Abstand zwischen dem dritten Signal und dem vierten Signal innerhalb eines vorbestimmten Bereichs liegt.

5. Verfahren nach Anspruch 4, wobei der Schritt des Modulierens des zweiten Signals das Modulieren des zweiten Signals mit einem trägerunterdrückten Return-to-Zero-Puls-Carver umfasst.

6. Verfahren nach einem beliebigen der vorstehenden Ansprüche, wobei der Schritt des Messens des spektralen Abstands unter Verwendung einer Photodiode durchgeführt wird.

7. Verfahren zum Anpassen einer Vielzahl von Transponder-Lasern in einem wellenlängengemultiplexten Gitter, wobei das Verfahren die folgenden Schritte umfasst:
Durchführen des Verfahrens gemäß einem beliebigen der vorstehenden Ansprüche für jedes Paar von benachbarten Transponder-Lasern.

8. Computerprogramm-Produkt mit computerausführbaren Befehlen zum Durchführen des Verfahrens gemäß einem beliebigen der vorstehenden Ansprüche.

9. Vorrichtung zum Anpassen mindestens eines Transponder-Lasers in einem wellenlängengemultiplexten Gitter, wobei die Vorrichtung umfasst:
einen ersten Transponder-Laser, ausgelegt für das Bereitstellen eines ersten Signals mit einer ersten Wellenlänge;
einen zweiten Transponder-Laser, ausgelegt für das Bereitstellen eines zweiten Signals mit einer zweiten Wellenlänge, wobei die zweite Wellenlänge mit der ersten Wellenlänge in dem Gitter benachbart ist;
einen Modulator, ausgelegt für das Modulieren des zweiten Signals, um ein drittes Signal in einem vorbestimmten spektralen Abstand von dem zweiten Signal zu erzeugen, derart, dass der spektrale Abstand zwischen dem dritten Signal und dem ersten Signal kürzer ist als der spektrale Abstand zwischen dem zweiten Signal und dem ersten Signal; und
Spektralabstand-Bestimmungsmittel, ausgelegt für das Bestimmen des spektralen Abstands zwischen dem ersten Signal und dem zweiten Signal unter Verwendung der Position des dritten Signals;
Steuermittel, ausgelegt für das Anpassen der Wellenlänge des zweiten Lasers, so dass der spektrale Abstand zwischen dem ersten Signal und dem zweiten Signal innerhalb eines vorbestimmten Bereichs liegt.

10. Vorrichtung nach Anspruch 9, wobei:
das Spektralabstand-Bestimmungsmittel für das Messen des spektralen Abstands zwischen dem dritten Signal und dem ersten Signal ausgelegt ist; und
das Steuermittel für das Anpassen der Wellenlänge des zweiten Lasers, bis der spektrale Abstand zwischen dem dritten Signal und dem ersten Signal unter einem vorbestimmten Wert liegt, ausgelegt ist.

11. Vorrichtung nach Anspruch 10, wobei der Modulator ein Return-to-Zero-Puls-Carver ist.

12. Vorrichtung nach Anspruch 9, weiterhin umfassend:
einen Modulator, ausgelegt für das Modulieren des ersten Signals, um ein viertes Signal in einem vorbestimmten spektralen Abstand von dem ersten Signal zu erzeugen, derart, dass der spektrale Abstand zwischen dem vierten Signal und dem zweiten Signal kürzer ist als der spektrale Abstand zwischen dem zweiten Signal und dem ersten Signal;
wobei das Spektralabstand-Bestimmungsmittel für das Messen des spektralen Abstands zwischen dem dritten Signal und dem vierten Signal ausgelegt ist;
wobei das Steuermittel für das Anpassen der Wellenlänge des zweiten Lasers, so dass der spektrale Abstand zwischen dem dritten Signal und dem vierten Signal innerhalb eines vorbestimmten Bereichs liegt, ausgelegt ist.

13. Vorrichtung nach Anspruch 12, wobei der Modulator ein trägerunterdrückten Return-to-Zero-Puls-Carver ist.

14. Vorrichtung nach einem beliebigen der vorstehenden Ansprüche, wobei das Spektralabstand-Bestimmungsmittel eine Photodiode ist.

## Revendications

1. Procédé de réglage d'au moins un laser transpondeur dans une grille multiplexée par répartition en longueur d'onde, le procédé comprenant les étapes suivantes :
fournir un premier signal à une première longueur d'onde en utilisant un premier laser transpondeur ;
fournir un deuxième signal à une deuxième longueur d'onde en utilisant un deuxième laser transpondeur, la deuxième longueur d'onde étant adjacente à la première longueur d'onde dans la grille ;
moduler le deuxième signal pour produire un troisième signal à une distance spectrale prédéterminée du deuxième signal, de sorte que la distance spectrale entre le troisième signal et le premier signal soit plus courte que la distance spectrale entre le deuxième signal et le premier signal ; et
déterminer, en utilisant la position du troisième signal, la distance spectrale entre le premier signal et le deuxième signal ;
régler la longueur d'onde du deuxième laser de sorte que la distance spectrale entre le premier signal et le deuxième signal soit dans une plage prédéterminée.

2. Procédé selon la revendication 1, dans lequel :
l'étape d'utilisation de la position du troisième signal pour déterminer la distance spectrale entre le premier signal et le deuxième signal comprend l'étape de mesure de la distance spectrale entre le troisième signal et le premier signal ; et
la longueur d'onde du deuxième laser est réglée jusqu'à ce que la distance spectrale entre le troisième signal et le premier signal soit inférieure à une quantité prédéterminée.

3. Procédé selon la revendication 2, dans lequel l'étape de modulation du deuxième signal comprend la modulation du deuxième signal avec un moyen de production d'impulsions de retour à zéro.

4. Procédé selon la revendication 1, dans lequel :
le procédé comprend en outre l'étape de modulation du premier signal pour produire un quatrième signal à une distance spectrale prédéterminée du premier signal, de sorte que la distance spectrale entre le quatrième signal et le deuxième signal soit plus courte que la distance spectrale entre le deuxième signal et le premier signal ;
l'étape d'utilisation de la position du troisième signal pour déterminer la distance spectrale entre le premier signal et le deuxième signal comprend l'étape de mesure de la distance spectrale entre le troisième signal et le quatrième signal ; et
la longueur d'onde du deuxième laser est réglée jusqu'à ce que la distance spectrale entre le troisième signal et le quatrième signal soit dans une plage prédéterminée.

5. Procédé selon la revendication 4, dans lequel l'étape de modulation du deuxième signal comprend la modulation du deuxième signal avec un moyen de production d'impulsions de retour à zéro à porteuse supprimée.

6. Procédé selon l'une quelconque des revendications précédentes, dans lequel l'étape de mesure de la distance spectrale est réalisée en utilisant une photodiode.

7. Procédé de réglage d'une pluralité de lasers transpondeurs dans une grille multiplexée par répartition en longueur d'onde, le procédé comprenant les étapes suivantes :
exécuter le procédé selon l'une quelconque des revendications ci-dessus pour chaque paire de lasers transpondeurs adjacents.

8. Produit de programme informatique comprenant des instructions exécutables par ordinateur permettant d'exécuter le procédé selon l'une quelconque des revendications précédentes.

9. Appareil pour régler au moins un laser transpondeur dans une grille multiplexée par répartition en longueur d'onde, l'appareil comprenant :
un premier laser transpondeur conçu pour fournir un premier signal à une première longueur d'onde ;
un deuxième laser transpondeur conçu pour fournir un deuxième signal à une deuxième longueur d'onde, la deuxième longueur d'onde étant adjacente à la première longueur d'onde dans la grille ;
un modulateur conçu pour moduler le deuxième signal pour produire un troisième signal à une distance spectrale prédéterminée du deuxième signal, de sorte que la distance spectrale entre le troisième signal et le premier signal soit plus courte que la distance spectrale entre le deuxième signal et le premier signal ; et
un moyen de détermination de la distance spectrale conçu pour déterminer la distance spectrale entre le premier signal et le deuxième signal en utilisant la position du troisième signal ;
un moyen de régulation conçu pour régler la longueur d'onde du deuxième laser de sorte que la distance spectrale entre le premier signal et le deuxième signal soit dans une plage prédéterminée.

10. Appareil selon la revendication 9, dans lequel :
le moyen de détermination de la distance spectrale est conçu pour mesurer la distance spectrale entre le troisième signal et le premier signal ; et
le moyen de régulation est conçu pour régler la longueur d'onde du deuxième laser jusqu'à ce que la distance spectrale entre le troisième signal et le premier signal soit inférieure à une quantité prédéterminée.

11. Appareil selon la revendication 10, dans lequel le modulateur est un moyen de production d'impulsions de retour à zéro.

12. Appareil selon la revendication 9, comprenant en outre :
un modulateur conçu pour moduler le premier signal pour produire un quatrième signal à une distance spectrale prédéterminée du premier signal, de sorte que la distance spectrale entre le quatrième signal et le deuxième signal soit plus courte que la distance spectrale entre le deuxième signal et le premier signal ;
le moyen de détermination de la distance spectrale est conçu pour mesurer la distance spectrale entre le troisième signal et le quatrième signal ; et
le moyen de régulation est conçu pour régler la longueur d'onde du deuxième laser jusqu'à ce que la distance spectrale entre le troisième signal et le quatrième signal soit dans une plage prédéterminée.

13. Appareil selon la revendication 12, dans lequel le modulateur est un moyen de production d'impulsions de retour à zéro à porteuse supprimée.

14. Appareil selon l'une quelconque des revendications précédentes, dans lequel le moyen de détermination de la distance spectrale est une photodiode.
